# EUROPÄISCHE PATENTANMELDUNG

(11) **EP 1 180 426 A2**
(43) Veröffentlichungstag der Anmeldung: **20.02.2002**
(21) Anmeldenummer: 01119215.0
(22) Anmeldetag: 09.08.2001
(51) Int. Cl.: B29C 59/10

(54) **Vorrichtung und Verfahren zur Koronabehandlung von Flachmaterial**

(30) Priorität: 10.08.2000 DE 10039073
(71) Anmelder: Bolte, Georg, Dr., D-33790 Halle (DE)
(72) Erfinder: Schwarz Gernd, 72622 Nürtlingen (DE); Holl, Peter, Dr., 72076 Tübingen (DE); Beying, Armin, Dr., 76297 Stutensee (DE); Bolte, Georg, Dr., 33790 Halle (DE)
(74) Vertreter: Möller, Friedrich, Dipl.-Ing.

(57) **Zusammenfassung**

Die Erfindung betrifft eine Vorrichtung und ein Verfahren zur Koronabehandlung von bogenförmigen Flachmaterial (10) in einer Druckmaschine. Zur Erzeugung von Koronaentladungen sind eine zum Transport des Bogenmaterials (10) rotierende walzenförmige Transportelektrodeneinheit (12), eine unter Begrenzung eines Behandlungsspalts (14) gegenüber der Transportelektrodeneinheit (12) angeordnete Behandlungselektrodeneinheit (16) und eine Hochspannungsquelle (18) vorgesehen. Um die Bogenbehandlung zu ermöglichen, sind an der Transportelektrodeneinheit (12) mantelseitig Bogengreifer (22) angeordnet, wobei eine Verstelleinrichtung (20) zum Verändern der Spaltweite des Behandlungsspalts (14) zwischen einer Arbeitsstellung und einer Greiferdurchlasstellung einen ungehinderten Umlauf der Bogengreifer erlaubt.

## Beschreibung

Die Erfindung betrifft eine Vorrichtung und ein Verfahren zur Koronabehandlung von Flachmaterial gemäß dem Oberbegriff der Patentansprüche 1, 8 bzw. 14.

Die Koronabehandlung ist für die Vorbehandlung und Modifikation der Oberflächen von bahnförmigen Materialien insbesondere in der Druckindustrie eine etablierte Technologie. Ziel dieser Behandlung ist es, die Materialoberfläche so zu funktionalisieren, dass für nachfolgende Prozessschritte wie Bedrucken, Kaschieren oder Bekleben günstige Eigenschaften, insbesondere eine ausreichende Haftung der Bschichtungsmittel auch auf an sich nichtpolaren Substraten erreicht werden. Bei der Behandlung von bewegten Bahnen wird das Bahnmaterial durch einen Entladungsspalt geführt, dessen Spaltweite typischerweise im Bereich von wenigen Millimetern liegt und sich zusammensetzt aus der Dicke der Bahn und einem Gasspalt über der zu behandelnden Oberfläche. Bei einer Weiterverarbeitung von Bahnmaterial in Form von stapelweise vorgehaltenen Einzelbögen besteht das Problem, dass sich die Effekte der Koronabehandlung zeitlich verändern bzw. zurückbilden, so dass häufig Qualitätsschwankungen im Fertigungsablauf auftreten.

Ausgehend hiervon liegt der Erfindung die Aufgabe zugrunde, eine Vorrichtung und ein Verfahren der eingangs angegebenen Art dahingehend zu verbessern, dass die vorgenannten Probleme vermieden werden und eine verbesserte Anpassung an unterschiedliche Anwendungsfälle besonders bei der Verarbeitung von Bogenmaterial ermöglicht wird.

Zur Lösung dieser Aufgabe wird die in den unabhängigen Patentansprüchen 1, 8 bzw. 14 jeweils angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, Einzelbögen als Flachmaterial während des Transports einer Koronabehandlung zugänglich zu machen. Dementsprechend werden erfindungsgemäß an der Transportelektrodeneinheit mantelseitig angeordnete Bogengreifer zur kantenseitigen Aufnahme von Flachmaterialbögen und eine Verstelleinrichtung zum Verändern der Spaltweite des Behandlungsspalts zwischen einer Arbeitsstellung und einer Greiferdurchlassstellung nach Maßgabe des Umlaufs der Bogengreifer vorgeschlagen. Damit ist es möglich, das Bogematerial durch das Elektrodensystem hindurchzuführen und den Behandlungsspalt in der Arbeitsstellung auf die erforderliche geringe Spaltweite einzustellen, während in der Durchlassstellung mit großem Spaltmaß ein ungehinderter Durchgang der überstehenden Greiferteile ermöglicht wird. Diese Maßnahmen erlauben es, Bogenmaterial direkt in der Verarbeitungslinie zu behandeln und dabei variable Parameter wie Transportgeschwindigkeit, Substrattyp und Beschichtungsmaterial feinfühlig einzubeziehen.

Gemäß einer bevorzugten Ausgestaltung der Erfindung ist die Verstelleinrichtung zum Bewegen der Behandlungselektrodeneinheit zwischen der Arbeitsstellung und der Greiferdurchlassstellung ausgebildet. Dies kann dadurch erfogen, dass die Verstelleinrichtung einen Hubmechanismus zur vorzugsweise radialen Hubbewegung oder einen Schwenkmechanismus zum Verschwenken der Behandlungselektrodeneinheit gegenüber der Transportelektrodeneinheit aufweist. Alternativ kann ein Drehantrieb zur gesteuerten Rotationsbewegung der Behandlungselektrodeneinheit vorgesehen sein.

Um die Synchronisation mit dem Durchgang bzw. Umlauf der Bogengreifer zu ermöglichen, ist es von Vorteil, wenn die Verstelleinrichtung eine vorzugsweise durch einen Kurventrieb gebildete Steuereinheit zur Bewegungssteuerung der Behandlungselektrodeneinheit aufweist.

Eine vorteilhafte Ausführung sieht vor, dass die Behandlungselektrodeneinheit eine achsparallel gegen die Tranportelektrodeneinheit andrückbare, ein Dielektrikum bildende hohlzylindrische Andrückwalze und eine darin exzentrisch angeordnete metallische Behandlungselektrode aufweist. Hier ist es günstig, wenn die im Bereich der Innenfläche der Andrückwalze angeordnete Behandlungselektrode in Umfangsrichtung der Andrückwalze verstellbar ist, um die Spaltweite des Behandlungsspalts variieren zu können. Eine weitere Verbesserung kann dadurch erreicht werden, dass die aktive Elektrodenfläche der Behandlungselektrode in Durchlaufrichtung des Flachmaterialbogens im Winkelabstand bezüglich einer durch die Andrücklinie der Andrückwalze verlaufenden Radialebene angeordnet ist. Damit kann auch der Bogenendabschnitt während der Behandlung auf der Transportwalze niedergehalten werden. Vorteilhafterweise die Behandlungselektrode durch einen gegen die Innenfläche der Andrückwalze anliegenden, drehbar gelagerten Elektrodenzylinder gebildet, während die Andrückwalze aus einer eigensteifen Kunststoffhülse besteht, welche zur Erhöhung des Reibschlusses mit einer mantelseitigen Gummierung versehen sein kann. Um parasitäre Hochspannungsentladungen zu verhindern, ist es zweckmäßig, wenn der Innenraum der Andrückwalze mit einem geeigneten Fluid bzw. Gas, insbesondere Schwefelhexafluorid beaufschlagt ist.

Ein weiterer Aspekt der Erfindung besteht darin, dass an der Transportelektrodeneinheit Bogengreifer zur kantenseitigen Aufnahme von Flachmaterialbögen angeordnet sind, und dass die Behandlungselektrodeneinheit mindestens eine Aussparung für den Durchlass der Bogengreifer aufweist. Dabei ist die Aussparung unter Drehung der Behandlungselektrodeneinheit synchron mit den Bogengreifern in den Bereich des Behandlungsspalts bewegbar, so dass die Bogengreifer beim Durchgang durch den Behandlungsspalt in die Aussparung eingreifen.

Eine baulich vorteilhafte Ausführung sieht vor, dass die Aussparung durch eine Axialnut in der zylindrischen Behandlungselektrodeneinheit gebildet ist. In jedem Fall sollte gewährleistet sein, dass die Aussparung an den mantelseitigen Überstand der Bogengreifer an der Transportwalze angepasst ist. Weiter ist es günstig, wenn die Aussparung mit einer eine Koronaentladung unterdrückenden Isolierung versehen ist.

Um eine zonenweisen Koronabehandlung des Flachmaterialbogens zu ermöglichen, wird vorgeschlagen, dass die Elektrodenfläche der Behandlungselektrodeneinheit zumindest in Längsrichtung des Behandlungsspalts durch Passivbereiche unterbrochen ist.

Zur Vermeidung lokaler Überhitzungen ist es vorteilhaft, wenn die Behandlungselektrodeneinheit eine unter Aufrechterhaltung des Behandlungsspalts vorzugsweise umlaufend bewegte Elektrodenfläche aufweist. Eine weitere vorteilhafte Ausführung sieht vor, dass die Behandlungselektrodeneinheit und/oder die Transportelektrodeneinheit eine vorzugsweise aus Gummi, Keramik, Glas, Quarz oder PTFE bestehende dielektrische Barriereschicht aufweisen.

Vorteilhafterweise ist die Tranportelektrodeneinheit als Teil des Transportapparates einer Druckmaschine, insbesondere einer Bogenoffsetmaschine dem Druckwerk vorgeordnet. Damit ist eine weitgehend verzögerungsfreie Anpassung der Koronabehandlung an den nachfolgenden Prozess insbesondere anhand einer Kontrolle des Druckerergebnisses möglich.

In verfahrensmäßiger Hinsicht wird zur Lösung der zuvor genannten Aufgabe vorgeschlagen, dass Einzelbögen als Flachmaterial über mantelseitig an der Transportelektrodeneinheit angeordnete Bogengreifer aufgenommen werden, und dass die Spaltweite des Behandlungsspalts synchron mit dem Umlauf der Bogengreifer zwischen einer Arbeitsstellung und einer Greiferdurchlassstellung verstellt wird.

Im Folgenden wird die Erfindung anhand der in der Zeichnung in schematischer Weise dargestellten Ausführungsbeispiele näher erläutert. Es zeigen
- Fig. 1: ein Blockschaltbild einer Koronabehandlungsanlage für Bogenmaterial,
- Fig. 2 und 3: eine Transportelektrodeneinheit mit Bogengreifem und eine Behandlungselektrodeneinheit mit einer Ausnehmung zum Durchlass der Bogengreifern in der Durchlassstellung und einer Arbeitsstellung,
- Fig. 4: eine ausschnittsweise vergrößerte Darstellung der Fig. 3,
- Fig. 5 und 6: weitere Ausführungsformen eines Koronaelektrodensystems mit schwenkbarer bzw. radial verschiebbarer Behandlungselektrodeneinheit in einer Seitenansicht.

Die in der Zeichnung dargestellte Vorrichtung zur Koronabehandlung von Flachmaterialbögen 10 besteht im wesentlichen aus einer walzenförmigen Transportelektrodeneinheit 12, einer unter Freihaltung eines Behandlungs- bzw. Entladungsspalts 14 für das Flachmaterial im radialen Abstand gegenüber der Tranportelektrodeneinheit 12 angeordneten Behandlungselektrodeneinheit 16, eine Hochspannungsquelle 18 zur Beaufschlagung der Elektrodeneinheiten 12, 16 mit hochfrequenter Hochspannung und einer Verstelleinrichtung 20 zum Verändern der Spaltweite des Behandlungsspalts 14 für den Durchlass von an der Transportelektrodeneinheit 12 angeordneten Bogengreifern 22.

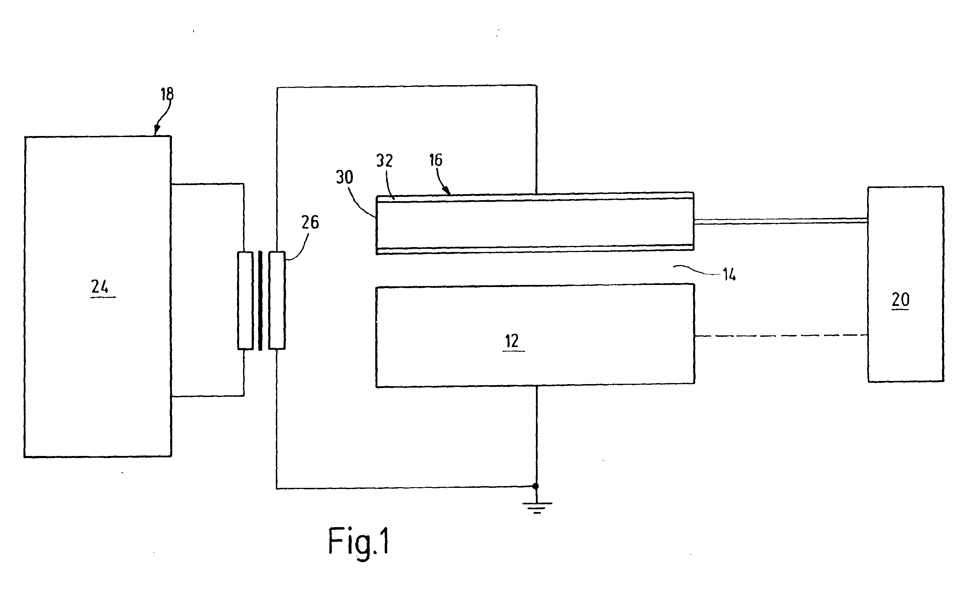

Wie aus Fig. 1 ersichtlich, weist die Hochspannungsquelle einen Hochfrequenzgenerator 24 und einen Hochfrequenztransformator 26 zur Erzeugung einer sinusförmigen oder gepulsten Hochspannung auf. Damit kann zwischen den Elektrodeneinheiten 12, 16 über den Entladungsspalt 14 eine Koronaentladung bzw. mikrofilamentierte Atmosphären-Plasma-Entladung 28 zur Oberflächenmodifikation des Bogenmaterials 10 gezündet werden. Die Transportelektrodeneinheit 12 ist dabei durch eine geerdete, metallisch blanke Walze gebildet, während die Behandlungselektrodeneinheit 16 eine metallische Behandlungselektrode bzw. einen Elektrodenkern 30 und einen dielektrischen Barriereüberzug 32 zur Terminierung der Mikroentladungen 28 aufweist.

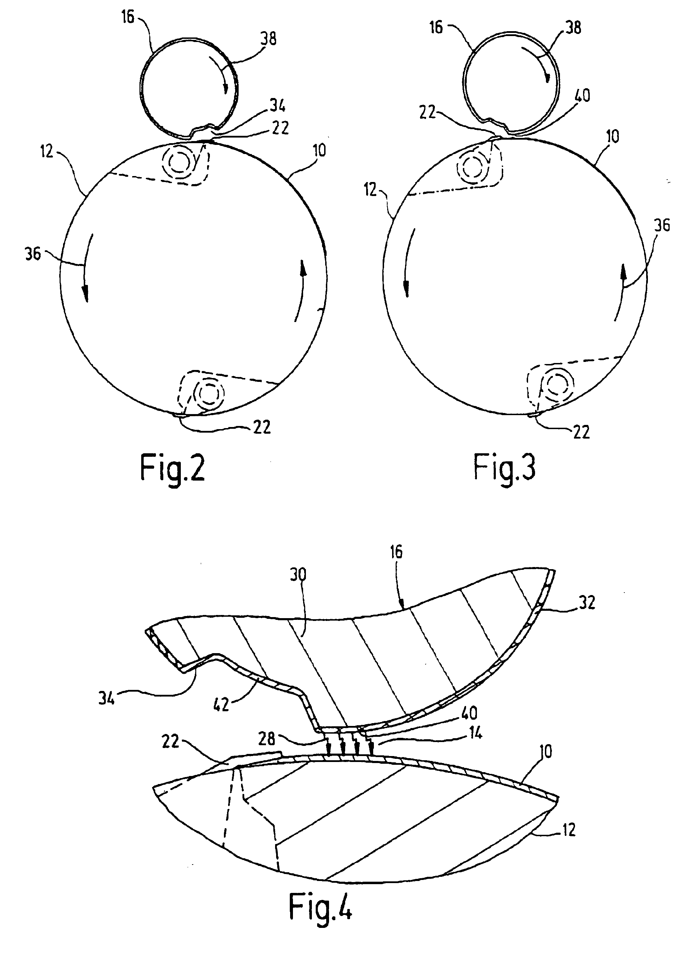

Bei dem in Fig. 2 bis 4 gezeigten Ausführungsbeispiel ist die zylindrische Behandlungselektrodeneinheit 16 mit einer mantelseitigen Aussparung 34 versehen und unter Drehung zwischen einer Arbeitsstellung (Fig. 2) und einer Durchlassstellung (Fig. 3, 4) verstellbar, um einen Durchgang der Bogengreifer 22 durch den Behandlungsspalt 14 zu ermöglichen.

Die schwenkbaren Bogengreifer 22 halten die Einzelbögen 10 an deren Führungskante zwischen einer Aufnahmestelle und einer im Winkelabstand von 180° angeordneten Übergabestelle der in Richtung der Pfeile 36 drehbaren Transportelektrodeneinheit 12. An der Aufnahmestelle wird durch den jeweils freien Bogengreifer 22 ein zu behandelnder Bogen klemmend aufgenommen, während der behandelte Bogen 10 an der Übergabestelle an eine nachgeordnete Einheit, insbesondere ein Druckwerk einer Bogenoffsetmaschine übergeben wird.

Zur Vermeidung einer Kollision oder Beschädigung der Bogengreifer 22 in dem engen Behandlungsspalt 14 sind die Drehbewegungen der Elektrodeneinheiten 12, 16 so aufeinander synchronisiert, dass die Bogengreifer 22 bei ihrem Umlauf in die Aussparung 34 eingreifen. Die Behandlungselektrodeneinheit 16 ist zu diesem Zweck über einen durch Pfeil 38 symbolisierten gesteuerten Drehantrieb in eine Rotationsbewegung versetzbar. Dabei wandert die aktive Elektrodenfläche 40 über den Behandlungsspalt 14 hinweg, wodurch die Gefahr von lokalen Überhitzungen verringert wird. Zwischen dem Dielektrikum 32 der Behandlungselektrodeneinheit 16 und dem Materialbogen 10 ist ein Gasbereich für die Koronaentladung freigehalten, in den gegebenenfalls über nicht gezeigte Zuleitungen Pressluft, reaktive Gase und/oder Aerosole eingeblasen werden können. Grundsätzlich ist es auch möglich, dass die Elektrodenfläche 40 durch isolierende Passivbereiche unterbrochen ist, um davon überdeckte Bereiche des Materialbogens 10 von der Koronabehandlung auszunehmen.

Die Aussparung 34 ist in ihren Abmessungen so an den Überstand der Bogengreifer 22 angepasst, dass bei deren Eingriff in der Durchlassstellung genügend Freiraum vorhanden ist, um auch ungewollte Entladungen zu verhindern. Gegebenenfalls ist die Aussparung 34 mit einem Isoliermaterial 42 ausgekleidet. Zweckmäßig erstreckt sich die Aussparung 34 als nutförmige Axialausnehmung über die Länge der Behandlungselektrodeneinheit 16, welche ihrerseits zumindest die Breite des Bogens 10 überspannt.

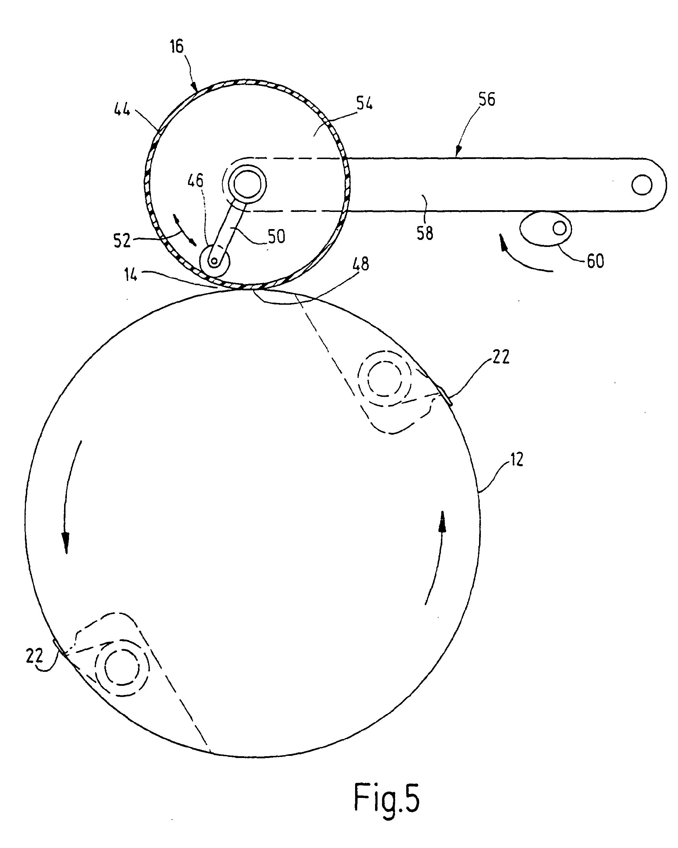

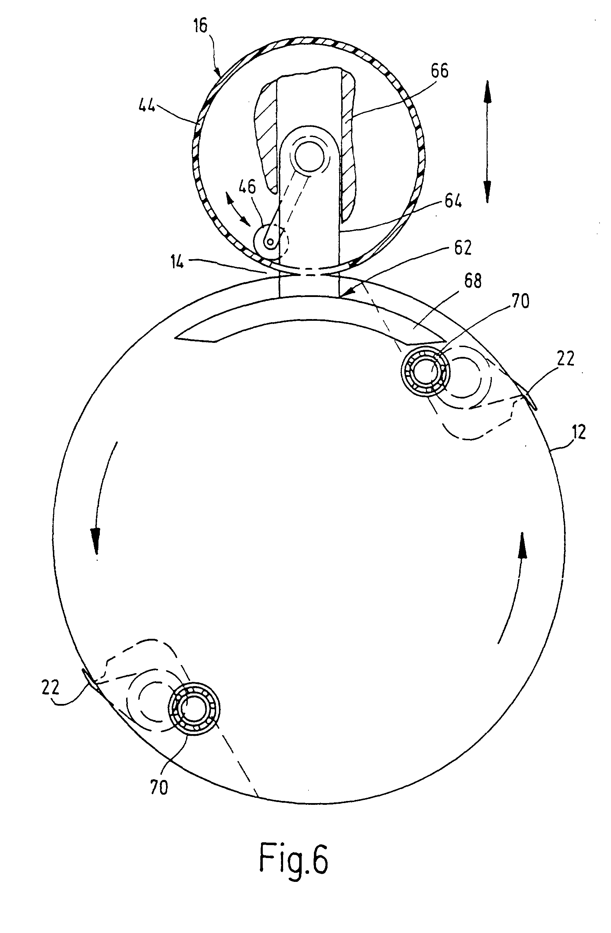

Bei den in Fig. 5 und 6 gezeigten Ausführungsbeispielen weist die Behandlungselektrodeneinheit 16 eine achsparallel gegen die Transportelektrodeneinheit andrückbare, ein Dielektrikum bildende hohlzylindrische Andrückwalze 44 und eine darin exzentrisch angeordnete metallische Behandlungselektrode 46 auf. Die drehbar gelagerte Andrückwalze 44 besteht aus einer eigensteifen glasfaserverstärkten Kunststoffhülse und liegt im Bereich einer Andrücklinie 48 unmittelbar gegen das Bogenmaterial an, so dass ein ungewolltes Abheben von der Tranportelektrode 12 verhindert wird.

Die Behandlungselektrode 46 ist durch einen gegen die Innenfläche der Andrückwalze 44 anliegenden, drehbar gelagerten metallischen Elektrodenzylinder gebildet. Um einen Entladungsspalt 14 zu schaffen, ist der Elektrodenzylinder 46 in Durchlaufrichtung des Bogenmaterials im Winkelabstand von der Andrücklinie 48 angeordnet. Durch diese Maßnahme wird auch der Bogenendabschnitt bei der Behandlung gegen die Transportwalze 12 angedrückt, was insbesondere bei steifem Bogenmaterial vorteilhaft ist. Zur Einstellung der Spaltweite des Behandlungsspalts 14 ist der Elektrodenzylinder 46 über einen im Bereich der Drehachse der Andrückwalze 44 angelenkten Schwenkarm 50 in Richtung des Doppelpfeils 52, also in Umfangsrichtung der Andrückwalze 44 verschwenkbar. Gegebenenfalls kann die Gegenelektrode 46 auch feststehend in geringem radialem Abstand von der Andrückwalze 44 angeordnet sein, wobei ein geeignetes Fluid im Innenraum 54 der Andrückwalze 44 parasitäre Hochspannungsentladungen verhindert.

Bei dem in Fig. 5 gezeigten Ausführungsbeispiel weist die Verstelleinrichtung 20 einen Schwenkmechanismus 56 zum Verschwenken der Behandlungselektrodeneinheit 16 zwischen der gezeigten Arbeitsstellung und einer Durchlassstellung für die Bogengreifer 22 auf. Der Schwenkmechanismus 56 umfasst eine die Behandlungselektrodeneinheit 16 tragende Schwinge 58, die über einen Kurventrieb 60 betätigbar ist Die Drehung des Kurventriebs 60 erfolgt dabei über ein nicht gezeigtes Steuergetriebe, das mit der Transportelektrodeneinheit 12 gekoppelt ist.

Die in Fig. 6 dargestellte Ausführungsform weist einen Hubmechanismus 62 zur radialen Hubbewegung der Behandlungselektrodeneinheit 16 gegenüber der Transportelektrodeneinheit 12 für den Greiferdurchlass auf. Der Hubmechanismus 62 besteht aus einer die Behandlungselektrodeneinheit 16 tragenden, in einer raumfesten Linearführung 64 geführten Hubstange 66 und einem Kurvengetriebe, das durch einen an der Hubstange 66 befestigten Kurventräger 68 und an der Transportelektrodeneinheit 12 gelagerte, gegen den Kurventräger 68 anlaufende Eingriffsglieder 70 gebildet ist.

Zusammenfassend ist Folgendes festzuhalten: Die Erfindung betrifft eine Vorrichtung und ein Verfahren zur Koronabehandlung von bogenförmigem Flachmaterial 10 in einer Druckmaschine. Zur Erzeugung von Koronaentladungen sind eine zum Transport des Bogenmaterials 10 rotierende walzenförmige Transportelektrodeneinheit 12, eine unter Begrenzung eines Behandlungsspalts 14 gegenüber der Transportelektrodeneinheit 12 angeordnete Behandlungselektrodeneinheit 16 und eine Hochspannungsquelle 18 vorgesehen. Um die Bogenbehandlung zu ermöglichen, sind an der Transportelektrodeneinheit 12 mantelseitig Bogengreifer 22 angeordnet, wobei eine Verstelleinrichtung 20 zum Verändern der Spaltweite des Behandlungsspalts 14 zwischen einer Arbeitsstellung und einer Greiferdurchlassstellung einen ungehinderten Umlauf der Bogengreifer erlaubt.

## Patentansprüche

1. Vorrichtung zur Koronabehandlung von Flachmaterial (10) mit einer zum Transport des Flachmaterials (10) rotierenden walzenförmigen Transportelektrodeneinheit (12), einer unter Begrenzung eines Behandlungsspalts (14) für das Flachmaterial (10) gegenüber der Transportelektrodeneinheit (12) angeordneten Behandlungselektrodeneinheit (16) und einer Hochspannungsquelle (18) zum Anlegen einer vorzugsweise hochfrequenten Hochspannung an die Elektrodeneinheiten (12, 16), **gekennzeichnet durch** an der Transportelektrodeneinheit (12) mantelseitig angeordnete Bogengreifer (22) zur kantenseitigen Aufnahme von Flachmaterialbögen (10) und eine Verstelleinrichtung (20) zum Verändern der Spaltweite des Behandlungsspalts (14) zwischen einer Arbeitsstellung und einer Greiferdurchlassstellung nach Maßgabe des Umlaufs der Bogengreifer (22).

2. Vorrichtung nach Anspruch 1, **dadurch gekennzeichnet, dass** die Verstelleinrichtung (20) zum Bewegen der Behandlungselektrodeneinheit (16) zwischen der Arbeitsstellung und der Greiferdurchlassstellung ausgebildet ist, vorzugsweise die Verstelleinrichtung (20) einen Hubmechanismus (62) zur vorzugsweise radialen Hubbewegung der Behandlungselektrodeneinheit (16) gegenüber der Transportelektrodeneinheit (12) und/oder einen Schwenkmechanismus (56) zum Verschwenken der Behandlungselektrodeneinheit (16) gegen die Transportelektrodeneinheit (12) aufweist.

3. Vorrichtung nach Anspruch 1 oder 2, **dadurch gekennzeichnet, dass** die Verstelleinrichtung (20) einen Drehantrieb (38) zur gesteuerten Rotationsbewegung der Behandlungselektrodeneinheit (16) aufweist.

4. Vorrichtung nach einem der Ansprüche 1 bis 3, **dadurch gekennzeichnet, dass** die Verstelleinrichtung (20) eine vorzugsweise durch einen Kurventrieb (60; 68, 70) gebildete Steuereinheit zur Bewegungssteuerung der Behandlungselektrodeneinheit (16) aufweist.

5. Vorrichtung nach einem der Ansprüche 1 bis 4, **dadurch gekennzeichnet, dass** die Behandlungselektrodeneinheit (16) eine achsparallel gegen die Transportelektrodeneinheit (12) andrückbare, ein Dielelektrikum bildende hohlzylindrische Andrückwalze (44) und eine darin exentrisch angeordnete metallische Behandlungselektrode (46) aufweist, wobei vorzugsweise die im Bereich der Innenfläche der Andrückwalze (44) angeordnete Behandlungselektrode (46) in Umfangsrichtung der Andrückwalze (44) verstellbar ist.

6. Vorrichtung nach Anspruch 5, **dadurch gekennzeichnet, dass** die aktive Elektrodenfläche der vorzugsweise durch einen gegen die Innenfläche der Andrückwalze (44) anliegenden, drehbar gelagerten Elektrodenzylinder (46) gebildeten Behandlungselektrode (46) in Durchlaufrichtung des Flachmaterialbogens (10) im Winkelabstand bezüglich einer durch die Andrücklinie (48) der Andrückwalze (44) verlaufenden Radialebene angeordnet ist.

7. Vorrichtung nach Anspruch 5 oder 6, **dadurch gekennzeichnet, dass** die Andrückwalze (44) aus einer vorzugsweise mit einer mantelseitigen Gummierung versehenen eigensteifen Kunststoffhülse besteht, wobei vorzugsweise der Innenraum (54) der Andrückwalze (44) mit einem Fluid oder Gas, insbesondere Schwefelhexafluorid zur Verhinderung parasitärer Hochspannungsentladungen, beaufschlagt ist.

8. Vorrichtung zur Koronabehandlung von Flachmaterial (10) mit einer zum Transport des Flachmaterials (10) rotierenden walzenförmigen Transportelektrodeneinheit (12), einer unter Begrenzung eines Behandlungsspalts (14) für das Flachmaterial (10) gegenüber der Transportelektrodeneinheit (12) angeordneten Behandlungselektrodeneinheit (16) und einer Hochspannungsquelle (18) zum Anlegen einer vorzugsweise hochfrquenten Hochspannung an die Elektrodeneinheiten (12,16), insbesondere nach einem der Ansprüche 1 bis 7, **dadurch gekennzeichnet, dass** an der Transportelektrodeneinheit (12) Bogengreifer (22) zur kantenseitigen Aufnahme von Flachmaterialbögen (10) angeordnet sind, und dass die Behandlungselektrodeneinheit (16) mindestens eine Aussparung (34) für den Durchlass der Bogengreifer (22) aufweist.

9. Vorrichtung nach Anspruch 8, **dadurch gekennzeichnet, dass** die vorzugsweise durch eine Axialnut in der zylindrischen Behandlungselektrodeneinheit (16) gebildete Aussparung (34) unter Drehung der Behandlungselektrodeneinheit (16) synchron mit den Bogengreifem (22) in den Bereich des Behandlungsspalts (14) bewegbar ist, so dass die Bogengreifer (22) beim Durchgang durch den Behandlungsspalt (14) in die Aussparung (34) eingreifen.

10. Vorrichtung nach Anspruch 8 oder 9, **dadurch gekennzeichnet, dass** die Aussparung (34) an den mantelseitigen Überstand der Bogengreifer (22) an der Transportelektrodeneinheit (12) angepasst ist und/oder die Aussparung (34) mit einer eine Koronaentladung unterdrückenden Isolierung (42) versehen ist.

11. Vorrichtung nach einem der Ansprüche 1 bis 10, **dadurch gekennzeichnet, dass** die Behandlungselektrodeneinheit (16) eine unter Aufrechterhaltung des Behandlungsspalts (14) vorzugsweise umlaufend bewegte Elektrodenfläche (40) aufweist, und/oder die Elektrodenfläche (40) der Behandlungselektrodeneinheit (16) zumindest in Längsrichtung des Behandlungsspalts (14) durch Passivbereiche zur zonenweisen Koronabehandlung des Flachmaterialbogens (10) unterbrochen ist.

12. Vorrichtung nach einem der Ansprüche 1 bis 11, **dadurch gekennzeichnet, dass** die Behandlungselektrodeneinheit (16) und/oder die Transportelektrodeneinheit (12) eine vorzugsweise aus Gummi, Keramik, Glas, Quarz oder PTFE bestehende dielelektrische Barriereschicht (32;44) aufweisen.

13. Vorrichtung nach einem der Ansprüche 1 bis 12, **dadurch gekennzeichnet, dass** die Transportelektrodeneinheit (12) als Teil des Transportapparats einer Druckmaschine, insbesondere einer Bogenoffsetmaschine dem Druckwerk vorgeordnet ist.

14. Verfahren zur Koronabehandlung von Flachmaterial (10) bei welchem das Flachmaterial (10) über eine rotierende walzenförmige Transportelektrodeneinheit (12) geführt wird und dabei durch einen von einer gegenüber der Transportelektrodeneinheit (12) angeordneten Behandlungselektrodeneinheit (16) begrenzten Behandlungsspalt hindurchbewegt wird, wobei die Elektrodeneinheiten (12,16) zur Erzeugung von Koronaentladungen mit vorzugsweise hochfrequenter Hochspannung beaufschlagt werden, **dadurch gekennzeichnet, dass** Einzelbögen als Flachmaterial (10) über mantelseitig an der Transportelektrodeneinheit (12) angeordnete Bogengreifer (22) aufgenommen werden, und dass die Spaltweite des Behandlungsspalts (14) synchron mit dem Umlauf der Bogengreifer (22) zwischen einer Arbeitsstellung und einer Greiferdurchlassstellung verstellt wird.
